# EUROPEAN PATENT SPECIFICATION

(11) **EP 3 822 732 B1**
(45) Date of publication and mention of the grant of the patent: **15.06.2022**
(21) Application number: 18927523.3
(22) Date of filing: 27.07.2018
(51) Int. Cl.: G05D 1/08, B64C 25/00, B64C 39/02, B64D 47/08

(54) **CONTROL METHOD AND APPARATUS FOR UNMANNED AERIAL VEHICLE AND UNMANNED AERIAL VEHICLE**
STEUERUNGSVORRICHTUNG UND VERFAHREN FÜR UNBEMANNTES LUFTFAHRZEUG SOWIE UNBEMANNTES LUFTFAHRZEUG
PROCÉDÉ ET APPAREIL DE COMMANDE POUR VÉHICULE AÉRIEN SANS PILOTE, ET VÉHICULE AÉRIEN SANS PILOTE

(43) Date of publication of application: 19.05.2021
(73) Proprietor: SZ DJI Technology Co., Ltd., Shenzhen, Guangdong 518057 (CN)
(72) Inventor: XIE, Wenlin, Shenzhen, Guangdong 518057 (CN); LIU, Yanchen, Shenzhen, Guangdong 518057 (CN); CHEN, Zihan, Shenzhen, Guangdong 518057 (CN)
(74) Representative: Appelt, Christian W.
(86) International application number: PCT/CN2018/097664
(87) International publication number: WO 2020/019350

(56) References cited:
- WO-A1-2017/222542
- CN-A- 103 863 559
- CN-A- 107 074 348
- CN-A- 108 263 628
- CN-U- 203 047 530
- CN-U- 205 499 395
- CN-U- 207 389 578
- US-A1- 2017 075 351
- US-A1- 2018 044 016
- US-A1- 2018 194 458

## Description

### TECHNICAL FIELD

The present disclosure relates to the field of control of unmanned aerial vehicles (UAVs) and, more particularly, to a control method and a control device for a UAV, and a UAV.

### BACKGROUND

In the existing technologies, in order to prevent a landing gear of the UAV from entering a shooting frame of a shooting device mounted at the UAV, the position of the landing gear is adjusted by controlling a rotation of a landing gear motor, and a determination is made by human visual inspection about whether the landing gear and a gimbal yaw axis are aligned. Specifically, the landing gear motor and the landing gear are connected through a transmission component such as a belt or a gear, so that the landing gear motor drives the landing gear to rotate. Because of influences from factors such as materials of belts or gears, installation deviations, etc., the rotation of the landing gear has deviations. As time goes by, the offset of the landing gear from the yaw axis of the gimbal increases, resulting in a larger portion of the landing gear appearing in the shooting frame and interfering with aerial photography.

WO 2017/222542 A1 discloses: An unmanned aerial vehicle may include a flight control circuit configured to control flight of the unmanned aerial vehicle and to provide a flight path based at least on an actual position of the unmanned aerial vehicle and a desired target position for the unmanned aerial vehicle; and at least one sensor configured to monitor an environment of the unmanned aerial vehicle and to detect one or more obstacles in the environment; wherein the flight control circuit is further configured to determine a local flight path to avoid a collision with one or more detected obstacles, and to superimpose the flight path with the local flight path, thereby generating a flight path to the desired target position avoiding a collision with the one or more detected obstacles.

US 2017/075351 A1 discloses: The disclosure describes devices and methods for controlling positioning of a payload on an unmanned aerial vehicle. A carrier as described herein may provide movement of a payload relative to a central body or one or more propulsion units of the unmanned aerial vehicle. The payload may move above and below the central body or the one or more propulsion units. The carrier may comprise one or more guides, a first actuator and a second actuator. The first actuator may permit the payload to translate with respect to the one or more guides and the second actuator may permit the payload to rotate about one or more axes of rotation with respect to the one or more guides.

US 2018/194458 A1 discloses matter that relates to the field of aircraft technologies, and provide an unmanned aerial vehicle including an unmanned aerial vehicle body and a landing gear. The landing gear is entirely accommodated in the unmanned aerial vehicle body when being in a folded state. When being folded, the landing gear in the disclosure is entirely accommodated in the unmanned aerial vehicle body, and therefore neither causes unnecessary resistance in air nor blocks an aerial photographing field of view in an aerial photographing process of the unmanned aerial vehicle. In addition, when the unmanned aerial vehicle is not in use, the landing gear is accommodated in the unmanned aerial vehicle body.

### SUMMARY

The present invention relates to a control method according to independent claim 1, to a control device according to independent claim 14, and to a UAV according to claim 15. Some of the preferred embodiments are described in the description, in the figures and in the claims.

It can be seen from the technical solutions provided by the independent claims and by the preferred embodiments of the present invention that when the landing gear is at a zero position, the yaw-axis motor is controlled to rotate to the different positions according to a specific strategy, thereby the first parameter is determined between the landing gear motor and the yaw-axis motor. During the aerial photography process, the landing gear motor is controlled to rotate according to the first parameter and the real-time rotation angle of the yaw-axis motor, so that the landing gear follows the gimbal yaw axis synchronously, which effectively prevents an accumulated error from causing deviation at the alignment position of the landing gear and the yaw axis of the gimbal, thereby preventing the landing gear from entering the image during the shooting while flying. This disclosure, different from the existing form of retractable landing gear that relies solely on a semi-closed loop of the steering gear, designs to intelligently follow the gimbal yaw axis, which is convenient for users to take aerial photography.

### BRIEF DESCRIPTION OF THE DRAWINGS

To more clearly illustrate the technical solution of the present disclosure, the accompanying drawings used in the description of the disclosed embodiments are briefly described below. It is obvious that the drawings described below are merely some embodiments of the present disclosure. Other drawings may be derived from such drawings by a person with ordinary skill in the art without creative efforts.
FIG. 1 is a structural diagram of an unmanned aerial vehicle (UAV) according to an embodiment of the present disclosure.
FIG. 2 is a schematic flow chart of a control method for a UAV according to an embodiment of the present disclosure.
FIG. 3 is a specific schematic flow chart of a control method for a UAV according to an embodiment of the present disclosure.
FIG. 4 is another specific schematic flow chart of a control method for a UAV according to an embodiment of the present disclosure.
FIG. 5 is another specific schematic flow chart of a control method for a UAV according to an embodiment of the present disclosure.
FIG. 6 is a structural block diagram of a control device for a UAV according to an embodiment of the present disclosure.
FIG. 7 is a structural block diagram of a UAV according to an embodiment of the present disclosure.
FIG. 8 is another structural block diagram of a UAV according to an embodiment of the present disclosure.
FIG. 9 is another structural block diagram of a UAV according to an embodiment of the present disclosure.

### Reference numerals:

100-Frame Assembly, 200-Gimbal, 210-Yaw-Axis Motor, 300-Landing Gear, 310-Landing Gear Motor, 320-Support Rod, 400-Photographing Device, 500-Processor, 600-Power Mechanism, 700-External Device, 710-Terminal, 720-Remote Controller, 800-First Sensing Device, 900-Second Sensing Device.

### DETAILED DESCRIPTION OF THE EMBODIMENTS

The technical solutions in the example embodiments of the present disclosure will be described clearly and completely with reference to the accompanying drawings. The described embodiments are only some of the embodiments of the present disclosure, rather than all the embodiments. Based on the embodiments of the present disclosure, all other embodiments obtained by a person of ordinary skill in the art without creative efforts shall fall within the scope of the present disclosure.

A control method and a control device for an unmanned aerial vehicle (UAV), and a UAV will be described in detail with reference to the accompanying drawings. In the case of no conflict, the following embodiments and the features in the embodiments can be combined with each other.

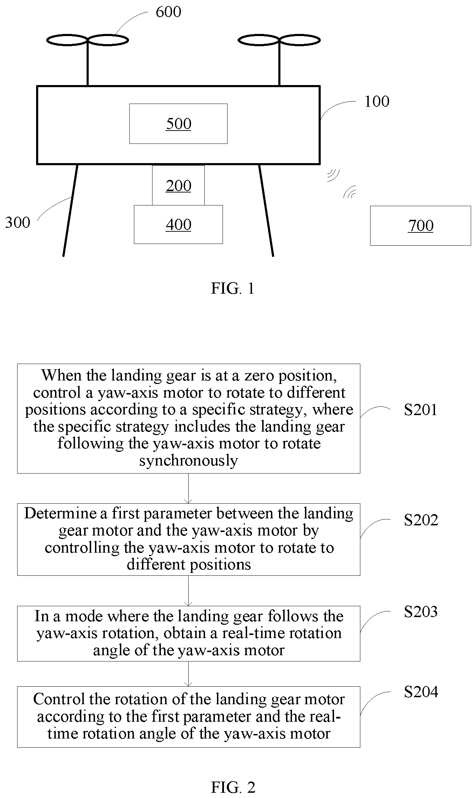

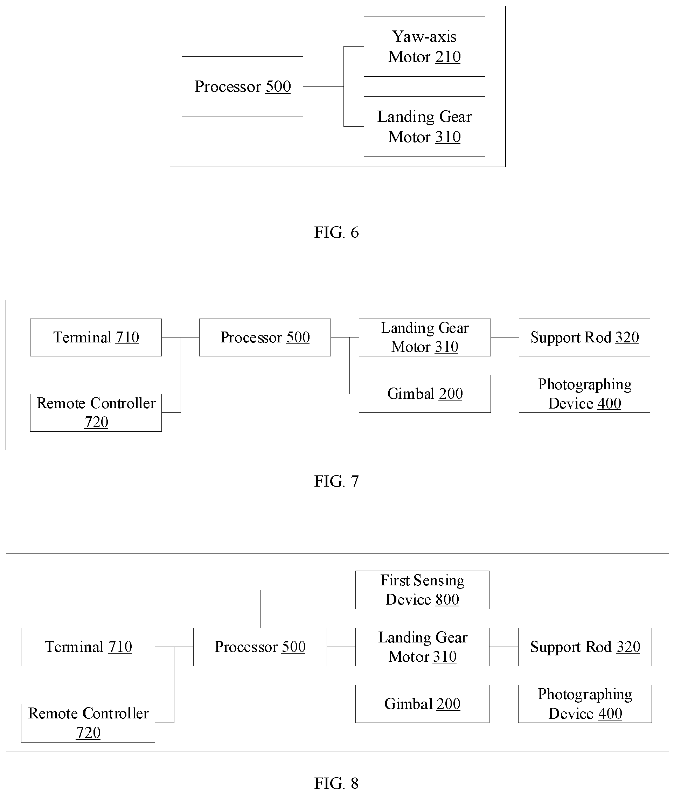

FIG. 1 is a schematic structural diagram of a UAV according to an embodiment of the present disclosure. The UAV includes a frame assembly 100, a gimbal 200 mounted at the frame assembly 100, and a landing gear 300, where the gimbal 200 is used to carry a photographing device 400. With reference to FIG. 6, the gimbal 200 of the embodiments includes a yaw axis and a yaw-axis motor 210 for driving the yaw axis to rotate. Further, the gimbal 200 of the embodiments may be a two-axis gimbal or a three-axis gimbal. The photographing device 400 may be an image capture device or a camera device (such as a camera, a camcorder, an infrared camera device, an ultraviolet camera device or the like), an audio capture device (for example, a parabolic reflective microphone), or an infrared camera device, etc. The photographing device 400 can provide static sensing data (such as images) or dynamic sensing data (such as videos). The photographing device 400 is mounted at the gimbal 200, so that the gimbal 200 controls the rotation of the photographing device 400. With reference to FIGs. 7-9, the landing gear 300 includes a landing gear motor 310 for driving the landing gear to rotate (specifically, the landing gear 300 includes a plurality of support rods 320, and the landing gear motor 310 is used to drive one or more of them to rotate). When the UAV is landing, the landing gear 300 is holding on the landing surface to ensure a safe landing of the UAV.

With further reference to FIGs. 7-9, the UAV of the embodiments further includes a processor 500, and the processor 500 may include one or more. For example, in some embodiments, the processor 500 is a flight controller. In some other embodiments, the processor 500 includes a flight controller and a gimbal controller, and the flight controller and the gimbal controller cooperate with each other. In some other embodiments, the processor 500 may be an independently configured controller. The embodiments do not specifically limit the type of the processor 500.

In the embodiments, the processor 500 may control the rotation of the gimbal 200, so as to control the attitude of the photographing device 400. The yaw-axis motor 210 of the embodiments is in communication connection with the processor 500, for example, based on a controller area network (CAN) bus or another communication connection manner. The rotation of the yaw-axis motor 210 can be controlled by the processor 500 to control the rotation of the yaw axis. In addition, in some embodiments, the photographing device 400 is in communication connection with the processor 500, for example, the photographing device 400 is in communication connection with the processor 500 directly, or the photographing device 400 is in communication connection with the processor 500 through the gimbal 200. The processor 500 may be used to control the operation of the photographing device 400 to obtain a shot image from the photographing device 400.

Further, the landing gear motor 310 is electrically connected to the processor 500 to realize a communication between the landing gear motor 310 and the yaw-axis motor 210. In the embodiments, the processor 500 and the landing gear motor 310 cooperate to drive the landing gear to rotate. Optionally, the landing gear 300 includes a plurality of support rods 320, for example, three, four, or five, etc. The plurality of support rods 320 in the embodiments are distributed around the gimbal 200 and the photographing device 400. A landing gear 300 including three support rods 320 is taken as an example for further description.

In some embodiments, there is one landing gear motor 310 for controlling the rotation of the three support rods 320. For example, one landing gear motor 310 can control the three support rods 320 to rotate synchronously, or one landing gear motor 310 can control any support rod 320 to rotate. In some embodiments, there are three landing gear motors 310 for controlling the rotation of the corresponding support rod 320. In addition, the type of the landing gear motor 310 can be selected as needed. For example, the landing gear motor 310 can be a servo motor.

Further, referring to FIG. 8, the UAV of this embodiment further includes a first sensing device 800 for detecting an actual rotation angle of the landing gear 300, and the first sensing device 800 is electrically connected to the processor 500. In the embodiments, the first sensing device 800 is a position sensor or an angle sensor. Optionally, the first sensing device 800 is a position sensor, and the position sensor is a Hall sensor. Here, the Hall sensor may include a Hall switch and a magnet to cooperate with the Hall switch. The Hall switch can be fixed at the frame assembly 100, and the magnet can be disposed at any support rod 320 of the landing gear 300.

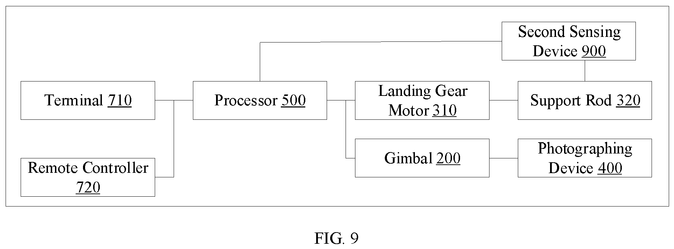

Further, referring to FIG. 9, the UAV of this embodiment further includes a second sensing device 900 for detecting a relative positional relationship between the landing gear 300 and the yaw axis of the gimbal 200, and the second sensing device 900 is electrically connected to the processor 500. In the embodiments, the second sensing device 900 is a position sensor or an angle sensor. Optionally, the second sensing device 900 is a position sensor, and the position sensor is a Hall sensor. Here, the Hall sensor may include a Hall switch and a magnet to cooperate with the Hall switch. The Hall switch can be fixed at the frame assembly 100, and the magnet can be disposed at any support rod 320 of the landing gear 300.

Optionally, the first sensing device 800 and the second sensing device 900 are the same device. Optionally, the first sensing device 800 and the second sensing device 900 are different devices.

Further, the UAV includes a power mechanism 600. The power mechanism 600 may include one or more rotation bodies, propellers, blades, motors, electronic governors, and the like. For example, the rotation body of the power mechanism 600 may be a self-tightening rotation body, a rotation body assembly, or another rotation body power unit. The UAV may have one or more power mechanisms 600. All power mechanisms 600 may be of the same type. Optionally, one or more power mechanisms 600 may be of different types. The power mechanism 600 can be mounted at the UAV by suitable means, such as by a supporting element (such as a drive shaft). The power mechanism 600 can be mounted at any suitable position of the UAV, such as a top end, a lower end, a front end, a rear end, a side, or any combination thereof. One or more power mechanisms 600 are controlled to control the flight of the UAV.

Referring to FIG. 1, the UAV may be in communication connection with an external device 700, such as a terminal 710 or a remote controller 720. In some embodiments, the terminal 710 may provide control data to one or more of the UAV, the gimbal 200, or the photographing device 400, and receive information (such as the position and/or movement information of the UAV, the gimbal 200 or the photographing device 400, or the data sensed by the photographing device 400, such as image data captured by the photographing device 400) from one or more of the UAV, the gimbal 200, or the photographing device 400. Further, the flight of the UAV can be controlled by the remote controller 720.

In some embodiments, the UAV can communicate with other remote devices other than the terminal 710, and the terminal 710 can also communicate with other remote devices other than the UAV. For example, the UAV and/or the terminal 710 may communicate with another UAV or a gimbal 200 or a photographing device 400 of another UAV. When needed, the additional remote device may be a second terminal 710 or another computing device (such as a computer, a desktop computer, a tablet computer, a smart phone, or another mobile device). The remote device can transmit data to the UAV, receive data from the UAV, transmit data to the terminal 710, and/or receive data from the terminal 710. Optionally, the remote device can be connected to an Internet or another telecommunication network, so that data received from the UAV and/or terminal 710 can be uploaded to a website or a server.

In some embodiments, a movement of the UAV, a movement of the gimbal 200, a movement of the photographing device 400 relative to a fixed reference object (such as an external environment), and/or a movement between each other can all be controlled by the terminal 710. The terminal 710 may be a remote control terminal 710, which is located away from the UAV, the gimbal 200 and/or the photographing device 400. The terminal 710 may be located at or pasted at a support platform. Optionally, the terminal 710 may be handheld or wearable. For example, the terminal 710 may include a smart phone, a tablet computer, a desktop computer, a computer, glasses, gloves, a helmet, a microphone, or any combination thereof. The terminal 710 may include a user interface, such as a keyboard, a mouse, a joystick, a touch screen, or a display. Any suitable user input may interact with the terminal 710, such as a manual input instruction, a voice control, a gesture control, or a position control (for example, through a movement, a position, or a tilt of the terminal 710).

Embodiment 1 will elaborate on the UAV control method according to the embodiments of the present disclosure.

### Embodiment 1

FIG. 2 is a flow chart of a control method of a UAV according to Embodiment 1 of the present disclosure. The execution entity of the UAV control method in this embodiment is the UAV, such as a processor 500 of the UAV. As shown in FIG. 2, the method includes the following processes.

At S201, when the landing gear 300 is at a zero position, a yaw-axis motor 210 is controlled to rotate to different positions according to a specific strategy, where the specific strategy includes the landing gear 300 following the yaw-axis motor 210 to rotate synchronously.

In this process, the landing gear 300 and the yaw-axis motor 210 rotate synchronously. For example, the landing gear 300 can be fixed to the yaw axis by a mechanical locking manner. When the yaw-axis motor 210 drives the yaw axis to rotate, the landing gear 300 rotates synchronously. Further, the specific strategy further includes controlling a landing gear motor 310 to be powered on, and controlling an output torque of the landing gear motor 310 to be zero. In this embodiment, linear velocities of the landing gear motor 310 and the yaw-axis motor 210 are the same, but angular velocities are different, so it is needed to further determine a rotation angle relationship between the landing gear motor 310 and the yaw-axis motor 210.

Because of influences from factors such as materials of belts or gears, installation deviations, etc., the rotation of the landing gear has deviations. As time goes by, the offset of the landing gear from the yaw axis of the gimbal increases, resulting in a larger portion of the landing gear appearing in the shooting frame and interfering with aerial photography.

Because of influences from factors such as the material and installation deviation of a belt or gear used to connect the landing gear motor 310 and the landing gear 300, a rotation deviation of the landing gear motor 310 (reflected in a deviation of the landing gear 300 relative to the yaw axis) may be different at a different rotation position of the landing gear motor 310. For example, when the landing gear motor 310 rotates one turn, at the rotation intervals of 0-30°, 30°-90°, 90°-180°, 180°-360°, the rotation deviations of the landing gear motor 310 are different, which affects a first parameter between the landing gear motor 310 and the yaw-axis motor 210 (the first parameter is a rotation angle relationship between the landing gear motor 310 and the yaw-axis motor 210, and the first parameter is determined at process S202). If a number of turns of rotation of the motor at process S201 is less than one, the first parameter determined at process S202 is inaccurate. That is, the number of turns of rotation of the motor at process S201 affects the accuracy of the first parameter determined at process S202. In this embodiment, at S201, the yaw-axis motor 210 is controlled to rotate at least one turn according to the specific strategy. For example, the number of turns of rotation of the yaw-axis motor 210 may be 1 turn, 1.5 turns, 2 turns, 2.5 turns, 3 turns, 4 turns, or more. The bigger the number of turns of rotation of the motor at process S201, the more accurate the first parameter determined at process S202. When the number of turns of rotation of the motor at process S201 is greater than one, the first parameter determined in the first turn of rotation of the motor can be calibrated according to the first parameter determined in the rotation after the first turn of rotation of the motor.

In addition, before process S201 is performed, it is needed to control the landing gear 300 to be at the zero position, and there may be multiple manners to control the landing gear 300 to be at the zero position. For the implementation manner of controlling the landing gear 300 to be at the zero position, reference can be made to process S203 in the following embodiments.

At S202, the first parameter between the landing gear motor 310 and the yaw-axis motor 210 is determined by controlling the yaw-axis motor 210 to rotate to the different positions.

In the embodiments, controlling the yaw-axis motor 210 to rotate to the different positions according to the specific strategy ensures that the landing gear 300 and the yaw-axis motor 210 rotate synchronously, and excludes the scenario that the landing gear 300 and the yaw-axis motor 210 are not synchronized because of the influence on the rotation of the landing gear 300 from factors such as the material and installation deviation of the belt or gear when the landing gear motor 310 controls the landing gear 300 to follow the yaw-axis motor 210 to rotate synchronously. Then, the first parameter is determined by controlling the yaw-axis motor 210 to rotate to the different positions. In the subsequent process of the UAV aerial photography, the rotation of the landing gear motor 310 is controlled according to the first parameter and the actual rotation angle of the yaw-axis motor 210, therefore the influence on the rotation of the landing gear 300 from factors such as the material and installation deviation of the belt or gear is eliminated, and the landing gear 300 is ensured in a synchronized following state with the yaw axis.

In this process, the first parameters can be determined by collecting angles, or by collecting angular velocities or other parameters. For example, in one embodiment, first rotation angles of the yaw-axis motor 210 and second rotation angles of the landing gear motor 310 are obtained when the yaw-axis motor 210 rotates to the different positions, and the first parameter is determined according to the various first rotation angles and the corresponding second rotation angles.

In another embodiment, when the yaw-axis motor 210 rotates to the different positions, a first rotation angular velocity of the yaw-axis motor 210 and a second rotation angular velocity of the landing gear motor 310 are obtained, and the first parameter is determined according to the various first rotation angular velocity and the corresponding second rotational angular velocity.

In the following embodiment, the first parameter is determined by collecting the first rotation angles and the second rotation angle for further description.

In the embodiments, the yaw-axis motor 210 rotates at least one turn, and the turn of the rotation of the yaw-axis motor 210 includes multiple rotation intervals. For example, one turn of the rotation of the yaw-axis motor 210 may include rotation intervals of 0-30°, 30°-90°, 90°-180°, 180°-360°. The method of dividing the turn of the rotation of the yaw-axis motor 210 is not limited to this. Specifically, the turn of the rotation of the yaw-axis motor 210 can be divided into a plurality of rotation intervals according to needs.

In the embodiments, the first rotation angle of the yaw-axis motor 210 and the second rotation angle of the landing gear motor 310 are obtained when the yaw-axis motor 210 rotates to a designated position in each rotation interval. The first rotation angle and the second rotation angle can be obtained in any existing manner, for example, the first rotation angle of the yaw-axis motor 210 and the second rotation angle of the landing gear motor 310 are collected based on a sensor.

Further, the designated position can also be selected according to needs. For example, the designated position can be a critical position of each rotation interval, such as 30°, 90°, 180°, 360°, and the designated position can also be another position in the rotation interval, such as a middle position of each rotation interval: 15°, 60°, 150°, 270°.

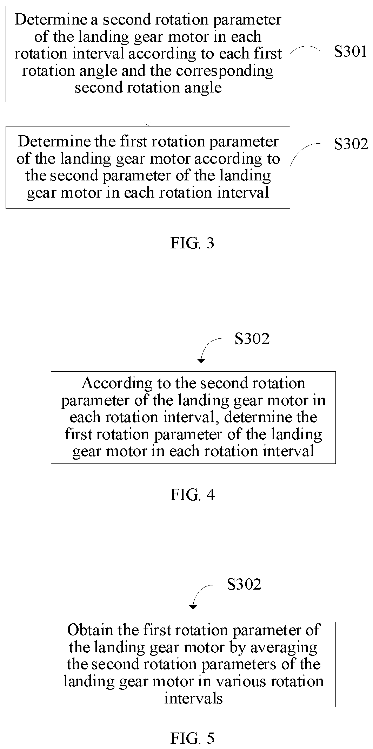

Specifically, referring to FIG. 3, determining the first parameter includes the following processes.

S301: determining a second parameter of the landing gear motor 310 in each rotation interval (that is, a relationship between the rotation angles of the landing gear 310 and the yaw-axis motor 210 in each rotation interval) according to each first rotation angle (that is, a first rotation angle corresponding to each rotation interval) and the corresponding second rotation angle.

S302: determining the first parameter according to the second parameter of the landing gear motor 310 in each rotation interval.

When the second parameter corresponding to each rotation interval is determined, according to a ratio of each first rotation angle to the corresponding second rotation angle, the second parameter of the landing gear motor 310 in each rotation interval is determined. That is, the second parameter of the landing gear motor 310 in each rotation interval = the first rotation angle of the rotation interval/the second rotation angle of the rotation interval.

After the second parameters of multiple rotation intervals are obtained, there may be multiple manners to determine the first parameter of the landing gear motor 310 according to the second parameters of the multiple rotation intervals. For example, in one of the embodiments, as shown in FIG. 4, according to the second parameter of the landing gear motor 310 in each rotation interval, the first parameter of the landing gear motor 310 in each rotation interval is determined. Specifically, when there are n (n is a positive integer and n>1) rotation intervals, the second parameters corresponding to the first rotation interval to the nth rotation interval are k1, k2, ..., kn, respectively. When the yaw-axis motor 210 rotates to the first rotation interval, the first parameter of the landing gear motor 310 is k1, and when the yaw-axis motor 210 rotates to the second rotation interval, the first parameter of the landing gear motor 310 is k2, and so on.

In another embodiment, referring to FIG. 5, the second parameters of the landing gear motor 310 in various rotation intervals are averaged to obtain the first parameter of the landing gear motor 310. When there are n (n is a positive integer and n>1) rotation interval, the second parameters corresponding to the first rotation interval to the nth rotation interval are k1, k2, ..., kn, and the first parameter = (k1 +k2+...+kn)/n. No matter where the yaw-axis motor 210 rotates to, the first parameter is fixed.

In some other embodiments, other manners may be used to process the second parameters of the landing gear motor 310 in various rotation intervals to determine the first parameter of the landing gear motor 310.

At S203, a real-time rotation angle of the yaw-axis motor 210 is obtained in a mode where the landing gear 300 follows the yaw axis to rotate.

In this embodiment, the yaw-axis motor 210 is provided with an encoder, and the real-time rotation angle of the yaw-axis motor 210 is obtained through the encoder. Detecting the angle by the encoder is an existing manner, and is not elaborated here.

In this embodiment, before process S203 is performed, the method further includes controlling the landing gear 300 to be at the zero position, and controlling the gimbal 200 to rotate after the landing gear 300 is at the zero position. When the landing gear 300 is at the zero position, the landing gear 300 does not block the lens of the photographing device 400 or the landing gear 300 blocks the lens less. After the landing gear 300 is at the zero position, the rotation of the gimbal 200 is controlled, so that the rotation of the landing gear motor 310 is controlled according to the rotation of the yaw-axis motor 210 and the first parameter, therefore the standard for the control of the landing gear 300 is unified to ensure the control accuracy of the landing gear 300 and reduce the possibility that the landing gear 300 interferes with shooting.

In some embodiments, the process of controlling the landing gear 300 to be at the zero position is performed immediately after it is determined that the UAV is powered on. In other embodiments, the process of controlling the landing gear 300 to be at the zero position can be performed during the flight of the UAV.

Further, there may be multiple manners to control the landing gear 300 to be at the zero position. For example, in one of the embodiments, the process of controlling the landing gear 300 to be at the zero position may include obtaining zero position information of the landing gear 300, and controlling the landing gear 300 to be at the zero position according to the zero position information. In some embodiments, the zero position information includes a position of the landing gear 300 relative to the gimbal 200 and/or the photographing device 400. Optionally, when the landing gear 300 is at the zero position, the two support rods 320 located at two sides of the photographing device 400 are located at two sides of the photographing device 400 symmetrically about a central axis of the photographing device 400. When the landing gear 300 includes three support rods 320, and further, when the landing gear 300 is at the zero position, the landing gear 300 is aligned with the yaw axis. Specifically, a support rod 320 at a rear end of the photographing device 400 mounted at the gimbal 200 can be controlled to directly face the yaw-axis, so that the landing gear 300 is aligned with the yaw axis. In this situation, the positions of the support rod 320 and the yaw axis coincide with each other.

The zero position information of the landing gear 300 can be pre-stored by a flight controller, or can be obtained from the terminal 710. When the zero position information of the landing gear 300 is pre-stored by the flight controller, the flight controller can directly read the stored zero position information of the landing gear 300 before controlling the landing gear 300 to be at the zero position. For example, when the flight controller determines that the UAV is powered on, the flight controller reads the stored zero position information of the landing gear 300, and controls the landing gear 300 to be at the zero position according to the zero position information of the landing gear 300.

When the zero position information of the landing gear 300 is obtained from the terminal 710, the process of obtaining the zero position information of the landing gear 300 may include firstly, receiving a return-to-zero instruction sent by the terminal 710 that controls the UAV, where the return-to-zero instruction carries the zero position information of the landing gear 300, and then, parsing out the zero position information of the landing gear 300 from the return-to-zero instruction. In this way, the landing gear 300 can be controlled to return to zero during the flight of the UAV, and the manner of controlling the return-to-zero of the landing gear 300 is more flexible. In this embodiment, the manner for parsing out the return-to-zero instruction can be any existing type of parsing manner.

In another embodiment, the landing gear 300 is provided with a second sensing device 900 for detecting a relative position relationship between the landing gear 300 and the yaw axis of the gimbal 200. The process of controlling the landing gear 300 to be at the zero position in this embodiment may include controlling, through the landing gear motor 310, the landing gear 300 to rotate, obtaining the relative position relationship between the landing gear 300 and the yaw axis of the gimbal 200 detected by the second sensing device 900, and determining that the landing gear 300 is at the zero position when it is determined that the landing gear 300 is aligned with the yaw axis according to the relative position relationship. In this embodiment, it can be determined based on the second sensing device 900 that a support rod 320 at a rear end of the photographing device 400 mounted at the gimbal 200 faces the yaw axis, that is, it can be determined that the landing gear 300 is aligned with the yaw axis. Optionally, when the landing gear 300 is aligned with the yaw axis, the second sensing device 900 outputs a high level, and in other scenarios, the second sensing device 900 outputs a low level. Therefore the output signal of the second sensing device 900 is used to determine whether the landing gear 300 is aligned with the yaw axis, so as to determine whether the landing gear 300 is at the zero position. In this way, the landing gear 300 can be controlled to return to zero during the flight of the UAV, and the manner of controlling the landing gear 300 to return to zero is more flexible.

Furthermore, before the landing gear 300 is controlled to be at the zero position, the method further includes calibrating the zero position of the landing gear 300. In this embodiment, calibration manners for the zero position of the landing gear 300 may include but are not limited to the following manners.

### A first manner

The rotation of the landing gear motor 310 is controlled to adjust the position of the landing gear 300, a relative position relationship between the landing gear 300 and the yaw axis of the gimbal 200 detected by the second sensing device 900 is obtained, current position information of the landing gear 300 is obtained when it is determined that the landing gear 300 is aligned with the yaw axis of the gimbal 200 according to the relative position relationship, and the current position information of the landing gear 300 is marked as the zero position information corresponding to the zero position of the landing gear 300.

In this embodiment, before the rotation of the landing gear motor 310 is controlled to adjust the position of the landing gear 300, a position adjustment instruction sent by the remote controller 720 is received, and according to the position adjustment instruction, the rotation of the landing gear motor 310 is controlled to adjust the position of the landing gear 300. This process is performed during the flight of the UAV.

### A second manner

When the landing gear 300 and the yaw axis of the gimbal 200 are aligned and fixed by a mechanical locking manner, current position information of the landing gear 300 is obtained, and the current position information of the landing gear 300 is marked as the zero position information corresponding to the zero position of the landing gear 300. This process is performed before the UAV flies, that is, the UAV is at a standstill.

Specifically, the UAV is in a stationary state, and a user manually controls the rotation of the landing gear 300 to make the landing gear 300 at the zero position. The landing gear 300 and the yaw axis of the gimbal 200 are aligned and fixed by a mechanical locking manner. Then, the current position information of the landing gear 300 is detected by a sensor, and the current position information is marked as the zero position information of the landing gear 300. In this embodiment, the user manually controls the two support rods 320 located at two sides of the photographing device 400 to be located at two sides of the photographing device 400 symmetrically about a central axis of the photographing device 400, and controls a support rod 320 at a rear end of the photographing device 400 mounted at the gimbal 200 to face the yaw axis, and uses a mechanical locking manner to fix the support rod 320 at the rear end of the photographing device 400 mounted at the gimbal 200 to the yaw axis, so that the landing gear 300 is at the zero position. When the landing gear 300 is at the zero position, it can ensure that the lens of the photographing device 400 is not blocked by the landing gear 300, or even the lens of the photographing device 400 is blocked by the landing gear 300, the landing gear 300 has little effect on the shot image of the photographing device 400. In both scenarios, it is considered that the landing gear 300 has no influence on the shot image of the photographing device 400.

### A third manner

When it is determined that the landing gear 300 does not exist in the shooting frame of the photographing device 400, or it is determined that the landing gear 300 is outside a designated area in the shooting frame of the photographing device 400, the current position information of the landing gear 300 is obtained, and the current position information of the landing gear 300 is marked as the zero position information corresponding to the zero position of the landing gear 300. Based on an image processing algorithm, it can be determined that the landing gear 300 does not exist in the shooting frame of the photographing device 400, or, based on an image processing algorithm, it can be determined that the landing gear 300 is outside a designated area in the shooting frame of the photographing device 400. The image processing algorithm can select any image recognition algorithm in the existing technology. The landing gear 300 being outside the designated area in the shooting frame of the photographing device 400 includes the landing gear 300 being outside a middle area of the shooting frame. For example, the landing gear 300 is located at the edge of the shooting frame, which does not affect the overall effect of the shooting frame, or the landing gear 300 can be removed from the shooting frame through a post-image processing without affecting the use of the shooting frame. A location and size of the designated area can also be selected according to the specific needs of the user.

In some embodiments, before it is determined that the landing gear 300 does not exist in the shooting frame of the photographing device 400, or it is determined that the landing gear 300 is outside the designated area in the shooting frame of the photographing device 400, the method may include receiving a position adjustment instruction sent by the remote controller 720, and according to the position adjustment instruction, controlling the rotation of the landing gear motor 310 to adjust the position of the landing gear 300, so that the landing gear 300 does not exist in the shooting frame of the photographing device 400, or the landing gear 300 is outside the designated area in the shooting frame of the photographing device 400. This process is performed during the flight of the UAV.

The landing gear 300 and the yaw axis of the gimbal 200 being aligned includes two support rods 320 located at two sides of the photographing device 400 symmetrically locating at two sides of the photographing device 400 along the central axis of the photographing device 400 and/or a support rod 320 at the rear end of the photographing device 400 mounted at the gimbal 200 facing the yaw axis.

In addition, there may be multiple manners to mark the zero position information corresponding to the zero position of the landing gear 300, such as directly storing the zero position information at the processor 500, or storing the zero position information in a storage device of the landing gear motor 310 (such as a flash memory), or sending the zero position information to the terminal 710 or the remote controller 720 and storing the zero position information of the landing gear 300 by the terminal 710 or the remote controller 720. For example, in a specific implementation manner, the zero position information is sent to the terminal 710 that controls the UAV to achieve a zero position calibration of the landing gear 300. When the landing gear 300 needs to be controlled to be at the zero position, a position adjustment instruction carrying the zero position information of the landing gear 300 is sent by the terminal 710 to the UAV, and the UAV controls the landing gear motor 310 to rotate according to the zero position information, so that the landing gear 300 can be at the zero position. Specifically, according to the position adjustment instruction, the rotation of the landing gear motor 310 is controlled to control the two support rods 320 located at two sides of the photographing device 400 mounted at the gimbal 200 to locate at two sides of the photographing device 400 symmetrically about the central axis of the photographing device 400, so that the two support rods 320 located at two sides of the photographing device 400 mounted at the gimbal 200 do not affect the shooting frame of the photographing device 400 too much, thereby achieving a better aerial photography effect. When the landing gear 300 includes three support rods 320, the rotation of the landing gear motor 310 also needs to be controlled according to the position adjustment instructions to control a support rod 320 at the rear end of the photographing device 400 mounted at the gimbal 200 to face the yaw axis to further align the landing gear 300 with the yaw axis, thereby reducing the impact of the landing gear 300 on the shooting of the photographing device 400.

At S204, the rotation of the landing gear motor 310 is controlled according to the first parameter and the real-time rotation angle of the yaw-axis motor 210.

In the process of the UAV aerial photography, the rotation of the landing gear motor 310 is controlled according to the first parameter and the actual rotation angle of the yaw-axis motor 210, therefore the influence on the rotation of the landing gear 300 from factors such as the material and installation deviation of the belt or gear is eliminated, and the landing gear 300 is ensured in a synchronized following state with the yaw axis.

Process S201 specifically includes determining a target rotation angle of the landing gear motor 310 according to the first parameter and the real-time rotation angle of the yaw-axis motor 210, and controlling the landing gear motor 310 to rotate according to the target rotation angle. Specifically, in this embodiment, the process of determining the target rotation angle of the landing gear motor 310 includes determining a target angle of the landing gear 300 according to the real-time rotation angle of the yaw-axis motor 210, and multiplying the first parameter and the target angle to determine the target rotation angle of the landing gear motor 310, that is, the target angle of the landing gear motor 310 = the first parameter × the target angle of the landing gear 300. If the rotation of the landing gear motor 310 is directly controlled according to the target angle of the landing gear 300, there will be deviation in the actual position of the landing gear 300 because of the influence from factors such as the material and installation deviation of a belt or gear used to connect the landing gear motor 310 and the landing gear 300, and the position deviation of the landing gear 300 will become larger and larger as time goes by. In this embodiment, the target angle of the landing gear 300 is corrected by using the first parameter to obtain the target angle of the landing gear motor 310, thereby achieving a precise control of the landing gear 300 and ensuring the alignment of the landing gear 300 and the yaw axis.

In addition, in this embodiment, when the rotation of the landing gear motor 310 is controlled, firstly, according to the target rotation angle, a drive signal of the landing gear motor 310 is generated, and then the drive signal is sent to the landing gear motor 310, therefore the rotation of the landing gear motor 310 is controlled to control the rotation of the landing gear 300, so that the landing gear 300 rotates synchronously with the yaw axis (that is, the landing gear 300 and the yaw axis remain relatively stationary).

After the drive signal is sent to the landing gear motor 310, the method may further include obtaining the actual rotation angle of the landing gear 300 based on the first sensing device 800, and adjusting the drive signal according to the actual rotation angle. A precise control of the landing gear motor 310 is achieved through a closed loop to precisely control the rotation of the landing gear 300.

Further, before the drive signal is adjusted according to the actual rotation angle, the method may further include determining that a difference between the actual rotation angle and the target rotation angle is less than a preset threshold (for example, 0.5°) to ensure a normal rotation of the landing gear motor 310, thereby precisely controlling the rotation of the landing gear 300. During the operation of the landing gear motor 310, obstacles may occur, resulting in a large rotation error of the landing gear motor 310. In this situation, the landing gear motor 310 is in an abnormal working state, and the actual rotation angle has a large error. A precise control of the landing gear motor 310 cannot be achieved by adjusting the drive signal according to the actual angle.

In addition, in this embodiment, a linear interpolation algorithm and/or an S-shaped interpolation algorithm are used to control the rotation of the landing gear motor 310 according to the target rotation angle, so that the landing gear 300 can smoothly rotate while following the yaw axis. The linear interpolation algorithm and the S-shaped interpolation algorithm are existing conventional algorithms.

Further, after process S202 and before process S203, the method may further include saving the first parameter. For example, the first parameter is saved at the flash memory of the landing gear motor 310, or the first parameter is sent to the terminal 710, and the first parameter is obtained from the terminal 710 in the mode where the landing gear 300 follows the yaw axis.

In an implementation manner, the first parameters are different according to the different rotation intervals of the yaw-axis motor 210. When the first parameter is saved, the first parameter of the landing gear motor 310 in each rotation interval is saved. In this embodiment, the rotation interval of the yaw-axis motor 210 and the first parameter are correspondingly saved. Optionally, the rotation interval of the yaw-axis motor 210 and the first parameter are correspondingly saved in a table. In this implementation manner, after process S203 and before process S204, the method further includes determining a current rotation interval of the yaw-axis motor 210 according to the real-time rotation angle of the yaw-axis motor 210, obtaining the corresponding first parameter according to the current rotation interval, and realizing a precise control of the landing gear 300 by controlling the rotation of the landing gear motor 310 according to the real-time rotation interval of the yaw-axis motor 210.

In another embodiment, the first parameter is a same fixed value, and when the first parameter is saved, the fixed value is saved. When process S204 is performed, the fixed value can be directly called.

In the UAV control method of the embodiments of the present disclosure, when the landing gear 300 is at the zero position, the yaw-axis motor 210 is controlled to rotate to the different positions according to a specific strategy, thereby the first parameter is determined between the landing gear motor 310 and the yaw-axis motor 210. During the aerial photography process, the landing gear motor 310 is controlled to rotate according to the first parameter and the real-time rotation angle of the yaw-axis motor 210, so that the landing gear 300 follows the gimbal yaw axis synchronously, which effectively prevents an accumulated error from causing deviation at the alignment position of the landing gear 300 and the yaw axis of the gimbal, thereby preventing the landing gear 300 from entering the image during the shooting while flying. The UAV control method of the embodiments of the present disclosure, different from the existing form of retractable landing gear 300 that relies solely on a semi-closed loop of the steering gear, designs to intelligently follow the gimbal yaw axis, which is convenient for users to take aerial photography.

### Embodiment 2

Referring to FIG. 6, Embodiment 2 of the present disclosure provides a UAV control device, which includes a gimbal 200 for carrying a photographing device 400, a landing gear motor 310 for driving a landing gear 300 of the UAV to rotate, and a processor 500. The gimbal 200 includes a yaw-axis motor 210, and the processor 500 is electrically connected to the landing gear motor 310 and the yaw-axis motor 210.

The processor 500 may be a central processing unit (CPU). The processor 500 may further include a hardware chip. The foregoing hardware chip may be an application-specific integrated circuit (ASIC), a programmable logic device (PLD), or a combination thereof. The above-mentioned PLD may be a complex programmable logic device (CPLD), a field-programmable gate array (FPGA), a generic array logic (GAL) or any combination thereof.

In this embodiment, there may be one or more processors 500, working individually or collectively. Optionally, the processor 500 may be a combination of one or more of a flight controller, a gimbal controller, or another controller provided at the UAV.

The processor 500 may implement the corresponding methods as shown in the embodiments of FIGs. 2-5 of the present disclosure.

Specifically, the processor 500 is configured to, when the landing gear 300 is at a zero position, control the yaw-axis motor 210 to rotate to different positions according to a specific strategy, where the specific strategy includes the landing gear 300 following the yaw-axis motor 210 to rotate synchronously, determine a first parameter between the landing gear motor 310 and the yaw-axis motor 210 by controlling the yaw-axis motor 210 to rotate to the different positions, in a mode where the landing gear 300 follows the yaw-axis to rotate, obtain a real-time rotation angle of the yaw-axis motor 210, and control the rotation of the landing gear motor 310 according to the first parameter and the real-time rotation angle of the yaw-axis motor 210.

It should be noted that, for the specific implementation of the processor 500 in the embodiments of the present disclosure, reference may be made to the description of the corresponding content in the above-described Embodiment 1, which is not repeated here.

In the UAV control device of the embodiments of the present disclosure, when the landing gear 300 is at the zero position, the yaw-axis motor 210 is controlled to rotate to the different positions according to a specific strategy, thereby the first parameter is determined between the landing gear motor 310 and the yaw-axis motor 210. During the aerial photography process, the landing gear motor 310 is controlled to rotate according to the first parameter and the real-time rotation angle of the yaw-axis motor 210, so that the landing gear 300 follows the gimbal yaw axis synchronously, which effectively prevents an accumulated error from causing deviation at the alignment position of the landing gear 300 and the yaw axis of the gimbal, thereby preventing the landing gear 300 from entering the image during the shooting while flying. The UAV control device of the embodiments of the present disclosure, different from the existing form of retractable landing gear 300 that relies solely on a semi-closed loop of the steering gear, designs to intelligently follow the gimbal yaw axis, which is convenient for users to take aerial photography.

### Embodiment 3

The Embodiment 3 of the present disclosure provides a UAV, which includes a frame assembly 100, a gimbal 200 mounted at the frame assembly 100, a landing gear 300, and a processor 500. The gimbal 200 is used for carrying a photographing device 400, and the gimbal of this embodiment includes a yaw-axis motor 210. The landing gear 300 includes a landing gear motor 310, and the landing gear motor 310 is used to drive the landing gear to rotate. The processor 500 of this embodiment is electrically connected to the yaw-axis motor 210 and the landing gear motor 310.

The processor 500 may be a central processing unit (CPU). The processor 500 may further include a hardware chip. The foregoing hardware chip may be an application-specific integrated circuit (ASIC), a programmable logic device (PLD), or a combination thereof. The above-mentioned PLD may be a complex programmable logic device (CPLD), a field-programmable gate array (FPGA), a generic array logic (GAL) or any combination thereof.

In this embodiment, there may be one or more processors 500, working individually or collectively. Optionally, the processor 500 may be a combination of one or more of a flight controller, a gimbal controller, or another controller provided at the UAV.

The processor 500 may implement the corresponding methods as shown in the embodiments of FIGs. 2-5 of the present disclosure.

Specifically, the processor 500 is configured to, when the landing gear 300 is at a zero position, control the yaw-axis motor 210 to rotate to different positions according to a specific strategy, where the specific strategy includes the landing gear 300 following the yaw-axis motor 210 to rotate synchronously, determine a first parameter between the landing gear motor 310 and the yaw-axis motor 210 by controlling the yaw-axis motor 210 to rotate to the different positions, in a mode where the landing gear 300 follows the yaw-axis to rotate, obtain a real-time rotation angle of the yaw-axis motor 210, and control the rotation of the landing gear motor 310 according to the first parameter and the real-time rotation angle of the yaw-axis motor 210.

Referring to FIG. 8, the UAV of this embodiment further includes a first sensing device 800 for detecting an actual rotation angle of the landing gear 300, and the first sensing device 800 is electrically connected to the processor 500.

Referring to FIG. 9, the UAV of this embodiment further includes a second sensing device 900 for detecting a relative position relationship between the landing gear 300 and a yaw axis of the gimbal 200, and the second sensing device 900 is electrically connected the processor 500.

It should be noted that, for the specific implementation of the processor 500 in the embodiments of the present disclosure, reference may be made to the description of the corresponding content in the above-described Embodiment 1, which is not repeated here.

For the UAV of the embodiments of the present disclosure, when the landing gear 300 is at the zero position, the yaw-axis motor 210 is controlled to rotate to the different positions according to a specific strategy, thereby the first parameter is determined between the landing gear motor 310 and the yaw-axis motor 210. During the aerial photography process, the landing gear motor 310 is controlled to rotate according to the first parameter and the real-time rotation angle of the yaw-axis motor 210, so that the landing gear 300 follows the gimbal yaw axis synchronously, which effectively prevents an accumulated error from causing deviation at the alignment position of the landing gear 300 and the yaw axis of the gimbal, thereby preventing the landing gear 300 from entering the image during the shooting while flying. The UAV of the embodiments of the present disclosure, different from the existing form of retractable landing gear 300 that relies solely on a semi-closed loop of the steering gear, designs to intelligently follow the gimbal yaw axis, which is convenient for users to take aerial photography.

In addition, an embodiment of the present disclosure further provides a computer-readable storage medium on which a computer program is stored. When the program is executed by the processor 500, the processes of the UAV control method of Embodiment 1 are implemented.

A person of ordinary skill in the art can understand that all or part of the processes in the above-described embodiment methods can be implemented by instructing relevant hardware through a computer program, and the program can be stored in a computer readable storage medium. When the program is executed, it may include the procedures of the above-described method embodiments. The storage medium may be a magnetic disk, an optical disc, a read-only memory (ROM), or a random access memory (RAM), etc.

The above-disclosed are only some of the embodiments of the present disclosure, which should not be used to limit the scope of the present disclosure. Therefore, equivalent changes made according to the claims of the present invention still fall within the scope of the present invention.

## Claims

1. A control method for an unmanned aerial vehicle (UAV), wherein the UAV includes a gimbal (200), a landing gear (300) and a landing gear motor (310), the gimbal (200) includes a yaw-axis motor (210), the method includes:
when the landing gear (300) is at a zero position at which the landing gear (300) is aligned with the yaw axis of the gimbal (200), controlling the yaw-axis motor (210) to rotate to different positions according to a specific strategy, wherein the specific strategy includes the landing gear (300) following the yaw-axis motor (210) to rotate synchronously, wherein the landing gear (300) is fixed to the yaw axis by a mechanical locking manner such that when the yaw-axis motor (210) drives the yaw axis to rotate, the landing gear (300) rotates synchronously;
determining a first parameter between the landing gear motor (310) and the yaw-axis motor (210) by controlling the yaw-axis motor (210) to rotate to the different positions, wherein the first parameter is a rotation angle relationship between the landing gear motor (310) and the yaw-axis motor (210);
in a mode where the landing gear (300, 310) follows the yaw-axis to rotate, obtaining a real-time rotation angle of the yaw-axis motor (210);
controlling the rotation of the landing gear motor according to the first parameter and the real-time rotation angle of the yaw-axis motor (210).

2. The method of claim 1, wherein the specific strategy further includes:
controlling the landing gear motor (310) to be powered on and controlling an output torque of the landing gear motor (310) to be zero.

3. The method of claim 1, wherein controlling the yaw-axis motor (210) to rotate to the different positions according to the specific strategy includes:
controlling the yaw-axis motor (210) to rotate at least one turn according to the specific strategy.

4. The method of claim 1, wherein determining the first parameter between the landing gear motor (310) and the yaw-axis motor (210) by controlling the yaw-axis motor (210) to rotate to the different positions includes:
obtaining first rotation angles of the yaw-axis motor (210) and second rotation angles of the landing gear motor (310) when the yaw-axis motor (210) rotates to the different positions;
determining the first parameter according to the various first rotation angles and the corresponding second rotation angles.

5. The method of claim 4, wherein:
the yaw-axis motor (210) rotates at least one turn, and the turn of the rotation of the yaw-axis motor (210) includes multiple rotation intervals;
obtaining the first rotation angles of the yaw-axis motor (210) and the second rotation angles of the landing gear motor (310) when the yaw-axis motor (210) rotates to the different positions includes:
obtaining the first rotation angle of the yaw-axis motor (210) and the second rotation angle of the landing gear motor (310) when the yaw-axis motor (210) rotates to a designated position in each rotation interval.

6. The method of claim 5, wherein determining the first parameter according to the various first rotation angles and the corresponding second rotation angles includes:
determining a second parameter of the landing gear motor (310) in each rotation interval according to each first rotation angle and the corresponding second rotation angle;
determining the first parameter according to the second parameter of the landing gear motor (310) in each rotation interval.

7. The method of claim 1, wherein after the first parameter of the landing gear motor (310) is determined according to each first rotation angle and the corresponding second rotation angle, and before the real-time rotation angle of the yaw-axis motor (210) is obtained in the mode where the landing gear motor (310) controls landing gear (300, 310) to rotate, the method further includes:
saving the first rotation parameter, preferably
wherein saving the first rotation parameter includes:
saving the first rotation parameter of the landing gear motor (310) in each rotation interval.

8. The method of claim 1, wherein controlling the rotation of the landing gear motor according to the first parameter and the real-time rotation angle of the yaw-axis motor (210) includes:
determining a target rotation angle of the landing gear motor according to the first parameter and the real-time rotation angle of the yaw-axis motor (210);
controlling the landing gear motor (310) to rotate according to the target rotation angle.

9. The method of claim 8, wherein determining the target rotation angle of the landing gear motor according to the first parameter and the real-time rotation angle of the yaw-axis motor (210) includes:
determining a target angle of the landing gear (300, 310) according to the real-time rotation angle of the yaw-axis motor (210);
multiplying the first parameter and the target angle to determine the target rotation angle of the landing gear motor (310).

10. The method of claim 8, wherein controlling the landing gear motor (310) to rotate according to the target rotation angle includes:
generating a drive signal of the landing gear motor according to the target rotation angle;
sending the drive signal to the landing gear motor (310), preferably
wherein after the drive signal is sent to the landing gear motor (310), the method further includes:
obtaining an actual rotation angle of the landing gear motor (310) based on a first sensing device (800);
adjusting the drive signal according to the actual rotation angle.

11. The method of claim 1, wherein:
the yaw-axis motor (210) is provided with an encoder;
obtaining the real-time rotation angle of the yaw-axis motor (210) includes:
obtaining the real-time rotation angle of the yaw-axis motor (210) through the encoder.

12. The method of claim 1, wherein before the real-time rotation angle of the yaw-axis motor (210) is obtained, the method further includes:
controlling the landing gear (300, 310) to be at the zero position;
controlling the gimbal (200) to rotate after the landing gear (300, 310) is at the zero position.

13. The method of claim 12, wherein controlling the landing gear (300, 310) to be at the zero position includes:
obtaining zero position information of the landing gear (300, 310);
controlling the landing gear (300, 310) to be at the zero position according to the zero position information, or
wherein controlling the landing gear (300, 310) to be at the zero position includes:
controlling, through the landing gear motor (310), the landing gear (300, 310) to rotate;
obtaining a relative position relationship between the landing gear (300, 310) and the yaw axis of the gimbal (200) detected by a second sensing device (900);
determining that the landing gear (300, 310) is at the zero position when it is determined that the landing gear (300, 310) is aligned with the yaw axis of the gimbal according to the relative position relationship, or
wherein controlling the landing gear (300, 310) to be at the zero position is performed immediately after it is determined that the UAV is powered on, or
wherein before the landing gear (300, 310) is controlled to be at the zero position, the method further includes:
calibrating the zero position of the landing gear (300, 310).

14. A control device for an unmanned aerial vehicle (UAV) comprising a processor (500), a gimbal (200) for carrying a photographing device (400), a landing gear motor (310) for driving a landing gear (300, 310) of the UAV to rotate, wherein the gimbal (200) includes a yaw-axis motor (210), the processor (500) is electrically connected to the landing gear motor (310) and the yaw-axis motor (210), there are one or more processors (500), working individually or collectively, and the processor (500) is configured to perform the method of any one of the preceding claims.

15. An unmanned aerial vehicle (UAV). comprising:
the device of claim 14;
a frame assembly (100);
wherein the gimbal (200) is mounted at the frame assembly (100) for carrying the photographing device (400).

## Patentansprüche

1. Steuerverfahren für ein unbemanntes Luftfahrzeug (UAV), wobei das UAV eine Kardanaufhängung (200), ein Fahrwerk (300) und einen Fahrwerkmotor (310) beinhaltet, die Kardanaufhängung (200) einen Gierachsenmotor (210) beinhaltet, das Verfahren Folgendes beinhaltet:
wenn sich das Fahrwerk (300) in einer Nullposition befindet, in der das Fahrwerk (300) auf die Gierachse der Kardanaufhängung (200) ausgerichtet ist, Steuern des Gierachsenmotors (210) zum Drehen in verschiedene Positionen gemäß einer spezifischen Strategie, wobei die spezifische Strategie beinhaltet, dass das Fahrwerk (300) dem Gierachsenmotor (210) zum synchronen Drehen folgt, wobei das Fahrwerk (300) in einer mechanischen Verriegelungsweise an der Gierachse befestigt ist, derart, dass, wenn der Gierachsenmotor (210) die Gierachse zum Drehen antreibt, das Fahrwerk (300) sich synchron dreht;
Bestimmen eines ersten Parameters zwischen dem Fahrwerkmotor (310) und dem Gierachsenmotor (210) durch Steuern des Gierachsenmotors (210) zum Drehen in die verschiedenen Positionen, wobei der erste Parameter eine Drehwinkelbeziehung zwischen dem Fahrwerkmotor (310) und dem Gierachsenmotor (210) ist;
in einem Modus, in dem das Fahrwerk (300, 310) der Gierachse beim Drehen folgt, Erhalten eines Echtzeitdrehwinkels des Gierachsenmotors (210);
Steuern der Drehung des Fahrwerkmotors gemäß dem ersten Parameter und dem Echtzeitdrehwinkel des Gierachsenmotors (210) .

2. Verfahren nach Anspruch 1, wobei die spezifische Strategie ferner Folgendes beinhaltet:
Steuern des Fahrwerkmotors (310) zum Einschalten und Steuern eines Ausgangsdrehmoments des Fahrwerkmotors (310) auf null.

3. Verfahren nach Anspruch 1, wobei das Steuern des Gierachsenmotors (210) zum Drehen in verschiedene Positionen gemäß der spezifischen Strategie Folgendes beinhaltet:
Steuern des Gierachsenmotors (210) zum Drehen gemäß der spezifischen Strategie um mindestens eine Umdrehung.

4. Verfahren nach Anspruch 1, wobei das Bestimmen des ersten Parameters zwischen dem Fahrwerkmotor (310) und dem Gierachsenmotor (210) durch Steuern des Gierachsenmotors (210) zum Drehen in die verschiedenen Positionen Folgendes beinhaltet:
Erhalten von ersten Drehwinkeln des Gierachsenmotors (210) und zweiten Drehwinkeln des Fahrwerkmotors (310), wenn sich der Gierachsenmotor (210) in die verschiedenen Positionen dreht;
Bestimmen des ersten Parameters gemäß den unterschiedlichen ersten Drehwinkeln und den entsprechenden zweiten Drehwinkeln.

5. Verfahren nach Anspruch 4, wobei:
der Gierachsenmotor (210) sich um mindestens eine Umdrehung dreht und die Umdrehung der Drehung des Gierachsenmotors (210) mehrere Drehintervalle beinhaltet;
das Erhalten der ersten Drehwinkel des Gierachsenmotors (210) und der zweiten Drehwinkel des Fahrwerkmotors (310), wenn sich der Gierachsenmotor (210) in die verschiedenen Positionen dreht, Folgendes beinhaltet:
Erhalten des ersten Drehwinkels des Gierachsenmotors (210) und des zweiten Drehwinkels des Fahrwerkmotors (310), wenn sich der Gierachsenmotor (210) in jedem Drehintervall in eine angegebene Position dreht.

6. Verfahren nach Anspruch 5, wobei das Bestimmen des ersten Parameters gemäß den unterschiedlichen ersten Drehwinkeln und den entsprechenden zweiten Drehwinkeln Folgendes beinhaltet:
Bestimmen eines zweiten Parameters des Fahrwerkmotors (310) in jedem Drehintervall gemäß jedem ersten Drehwinkel und dem entsprechenden zweiten Drehwinkel;
Bestimmen des ersten Parameters gemäß dem zweiten Parameter des Fahrwerkmotors (310) in jedem Drehintervall.

7. Verfahren nach Anspruch 1, wobei das Verfahren, nachdem der erste Parameter des Fahrwerkmotors (310) gemäß jedem ersten Drehwinkel und dem entsprechenden zweiten Drehwinkel bestimmt wird und bevor der Echtzeitdrehwinkel des Gierachsenmotors (210) in dem Modus erhalten wird, in dem der Fahrwerkmotor (310) das Fahrwerk (300, 310) zum Drehen steuert, ferner Folgendes beinhaltet:
Speichern des ersten Drehparameters, vorzugsweise
wobei das Speichern des ersten Drehparameters Folgendes beinhaltet:
Speichern des ersten Drehparameters des Fahrwerkmotors (310) in jedem Drehintervall.

8. Verfahren nach Anspruch 1, wobei das Steuern der Drehung des Fahrwerkmotors gemäß dem ersten Parameter und dem Echtzeitdrehwinkel des Gierachsenmotors (210) Folgendes beinhaltet:
Bestimmen eines Zieldrehwinkels des Fahrwerkmotors gemäß dem ersten Parameter und dem Echtzeitdrehwinkel des Gierachsenmotors (210);
Steuern des Fahrwerkmotors (310) zum Drehen gemäß dem Zieldrehwinkel.

9. Verfahren nach Anspruch 8, wobei Bestimmen des Zieldrehwinkels des Fahrwerkmotors gemäß dem ersten Parameter und dem Echtzeitdrehwinkel des Gierachsenmotors (210) Folgendes beinhaltet:
Bestimmen eines Zielwinkels des Fahrwerks (300, 310) gemäß dem Echtzeitdrehwinkel des Gierachsenmotors (210);
Multiplizieren des ersten Parameters und des Zielwinkels, um den Zieldrehwinkel des Fahrwerkmotors (310) zu bestimmen.

10. Verfahren nach Anspruch 8, wobei das Steuern des Fahrwerkmotors (310) zum Drehen gemäß dem Zieldrehwinkel Folgendes beinhaltet:
Erzeugen eines Ansteuersignals des Fahrwerkmotors gemäß dem Zieldrehwinkel;
Senden des Ansteuersignals zum Fahrwerkmotor (310), vorzugsweise
wobei das Verfahren nach dem Senden des Ansteuersignals zum Fahrwerkmotor (310) ferner Folgendes beinhaltet:
Erhalten eines tatsächlichen Drehwinkels des Fahrwerkmotors (310) auf Basis einer ersten Erfassungsvorrichtung (800);
Anpassen des Ansteuersignals gemäß dem tatsächlichen Drehwinkel.

11. Verfahren nach Anspruch 1, wobei:
der Gierachsenmotor (210) mit einem Codierer ausgerüstet ist;
das Erhalten des Echtzeitdrehwinkels des Gierachsenmotors (210) Folgendes beinhaltet:
Erhalten des Echtzeitdrehwinkels des Gierachsenmotors (210) über den Codierer.

12. Verfahren nach Anspruch 1, wobei das Verfahren vor dem Erhalten des Echtzeitdrehwinkels des Gierachsenmotors (210) ferner Folgendes beinhaltet:
Steuern des Fahrwerks (300, 310) in die Nullposition;
Steuern der Kardanaufhängung (200) zum Drehen, wenn sich das Fahrwerk (300, 310) in der Nullposition befindet.

13. Verfahren nach Anspruch 12, wobei das Steuern des Fahrwerks (300, 310) in die Nullposition Folgendes beinhaltet:
Erhalten von Nullpositionsinformationen des Fahrwerks (300, 310) ;
Steuern des Fahrwerks (300, 310) in die Nullposition gemäß den Nullpositionsinformationen, oder
wobei das Steuern des Fahrwerks (300, 310) in die Nullposition Folgendes beinhaltet:
Steuern des Fahrwerks (300, 310) über den Fahrwerkmotor (310) zum Drehen;
Erhalten einer relativen Positionsbeziehung zwischen dem Fahrwerk (300, 310) und der Gierachse der Kardanaufhängung (200), die von einer zweiten Erfassungsvorrichtung (900) detektiert wird;
Bestimmen, dass sich das Fahrwerk (300, 310) in der Nullposition befindet, wenn bestimmt wird, dass das Fahrwerk (300, 310) gemäß der relativen Positionsbeziehung auf die Gierachse der Kardanaufhängung ausgerichtet ist, oder
wobei das Steuern des Fahrwerks (300, 310) in die Nullposition sofort nach Bestimmen, dass das UAV eingeschaltet ist, durchgeführt wird, oder
wobei das Verfahren vor dem Steuern des Fahrwerks (300, 310) in die Nullposition ferner Folgendes umfasst:
Kalibrieren der Nullposition des Fahrwerks (300, 310).

14. Steuervorrichtung für ein unbemanntes Luftfahrzeug (UAV), das einen Prozessor (500), eine Kardanaufhängung (200) zum Tragen einer Fotografiervorrichtung (400), einen Fahrwerkmotor (310) zum Antreiben eines Fahrwerks (300, 310) des UAV zum Drehen umfasst, wobei die Kardanaufhängung (200) einen Gierachsenmotor (210) beinhaltet, der Prozessor (500) mit dem Fahrwerkmotor (310) und dem Gierachsenmotor (210) elektrisch verbunden ist, es einen oder mehrere Prozessoren (500) gibt, die einzeln oder zusammen arbeiten, und der Prozessor (500) dazu ausgelegt ist, das Verfahren nach einem der vorhergehenden Ansprüche durchzuführen.

15. Unbemanntes Luftfahrzeug (UAV), das Folgendes umfasst:
die Vorrichtung nach Anspruch 14;
eine Rahmenanordnung (100);
wobei die Kardanaufhängung (200) zum Tragen der Fotografiervorrichtung (400) an der Rahmenanordnung (100) montiert ist.

## Revendications

1. Procédé de commande pour un véhicule aérien sans pilote (UAV), dans lequel le véhicule UAV inclut une suspension à la Cardan (200), un train d'atterrissage (300) et un moteur de train d'atterrissage (310), la suspension à la Cardan (200) incluant un moteur d'axe de lacet (210), le procédé incluant les étapes ci-dessous consistant à :
lorsque le train d'atterrissage (300) est à une position zéro à laquelle le train d'atterrissage (300) est aligné avec l'axe de lacet de la suspension à la Cardan (200), commander au moteur d'axe de lacet (210) de tourner vers différentes positions selon une stratégie spécifique, dans laquelle la stratégie spécifique inclut le fait que le train d'atterrissage (300) suit le moteur d'axe de lacet (210) pour tourner de manière synchrone, dans lequel le train d'atterrissage (300) est fixé à l'axe de lacet par un mode de verrouillage mécanique, de sorte que, lorsque le moteur d'axe de lacet (210) entraîne l'axe de lacet en rotation, le train d'atterrissage (300) tourne de manière synchrone ;
déterminer un premier paramètre entre le moteur de train d'atterrissage (310) et le moteur d'axe de lacet (210), en commandant au moteur d'axe de lacet (210) de tourner vers les différentes positions, dans lequel le premier paramètre est une relation d'angle de rotation entre le moteur de train d'atterrissage (310) et le moteur d'axe de lacet (210) ;
dans un mode où le train d'atterrissage (300, 310) suit l'axe de lacet afin de tourner, obtenir un angle de rotation en temps réel du moteur d'axe de lacet (210) ;
commander la rotation du moteur de train d'atterrissage selon le premier paramètre et l'angle de rotation en temps réel du moteur d'axe de lacet (210).

2. Procédé selon la revendication 1, dans lequel la stratégie spécifique inclut en outre l'étape ci-dessous consistant à :
commander la mise sous tension du moteur de train d'atterrissage (310) et commander un couple de sortie du moteur de train d'atterrissage (310) afin qu'il soit nul.

3. Procédé selon la revendication 1, dans lequel l'étape consistant à commander la rotation du moteur d'axe de lacet (210) vers les différentes positions selon la stratégie spécifique inclut l'étape ci-dessous consistant à :
commander la rotation du moteur d'axe de lacet (210), d'au moins un tour, selon la stratégie spécifique.

4. Procédé selon la revendication 1, dans lequel l'étape consistant à déterminer le premier paramètre entre le moteur de train d'atterrissage (310) et le moteur d'axe de lacet (210), en commandant la rotation du moteur d'axe de lacet (210) vers les différentes positions, comprend les étapes ci-dessous consistant à :
obtenir des premiers angles de rotation du moteur d'axe de lacet (210) et des seconds angles de rotation du moteur de train d'atterrissage (310) lors de la rotation du moteur d'axe de lacet (210) vers les différentes positions ;
déterminer le premier paramètre selon les différents premiers angles de rotation et les seconds angles de rotation correspondants.

5. Procédé selon la revendication 4, dans lequel :
le moteur d'axe de lacet (210) tourne d'au moins un tour, et le tour de la rotation du moteur d'axe de lacet (210) inclut de multiples intervalles de rotation ;
l'étape d'obtention des premiers angles de rotation du moteur d'axe de lacet (210) et des seconds angles de rotation du moteur de train d'atterrissage (310), lors de la rotation du moteur d'axe de lacet (210) vers les différentes positions, inclut l'étape ci-dessous consistant à :
obtenir le premier angle de rotation du moteur d'axe de lacet (210) et le second angle de rotation du moteur de train d'atterrissage (310) lors de la rotation du moteur d'axe de lacet (210) vers une position désignée dans chaque intervalle de rotation.

6. Procédé selon la revendication 5, dans lequel l'étape de détermination du premier paramètre selon les différents premiers angles de rotation et les seconds angles de rotation correspondants, inclut les étapes ci-dessous consistant à :
déterminer un second paramètre du moteur de train d'atterrissage (310) dans chaque intervalle de rotation selon chaque premier angle de rotation et le second angle de rotation correspondant ;
déterminer le premier paramètre selon le second paramètre du moteur de train d'atterrissage (310) dans chaque intervalle de rotation.

7. Procédé selon la revendication 1, dans lequel, après que le premier paramètre du moteur de train d'atterrissage (310) a été déterminé selon chaque premier angle de rotation et le second angle de rotation correspondant, et avant que l'angle de rotation en temps réel du moteur d'axe de lacet (210) soit obtenu dans le mode où le moteur de train d'atterrissage (310) commande la rotation du train d'atterrissage (300, 310), le procédé inclut en outre l'étape ci-dessous consistant à :
enregistrer le premier paramètre de rotation, de préférence
dans lequel l'étape d'enregistrement du premier paramètre de rotation inclut l'étape ci-dessous consistant à :
enregistrer le premier paramètre de rotation du moteur de train d'atterrissage (310) dans chaque intervalle de rotation.

8. Procédé selon la revendication 1, dans lequel l'étape de commande de la rotation du moteur de train d'atterrissage selon le premier paramètre et l'angle de rotation en temps réel du moteur d'axe de lacet (210), inclut les étapes ci-dessous consistant à :
déterminer un angle de rotation cible du moteur de train d'atterrissage selon le premier paramètre et l'angle de rotation en temps réel du moteur d'axe de lacet (210) ;
commander la rotation du moteur de train d'atterrissage (310) selon l'angle de rotation cible.

9. Procédé selon la revendication 8, dans lequel l'étape de détermination de l'angle de rotation cible du moteur de train d'atterrissage selon le premier paramètre et l'angle de rotation en temps réel du moteur d'axe de lacet (210) inclut les étapes ci-dessous consistant à :
déterminer un angle cible du train d'atterrissage (300, 310) selon l'angle de rotation en temps réel du moteur d'axe de lacet (210) ;
multiplier le premier paramètre et l'angle cible en vue de déterminer l'angle de rotation cible du moteur de train d'atterrissage (310).

10. Procédé selon la revendication 8, dans lequel l'étape consistant à commander la rotation du moteur de train d'atterrissage (310) selon l'angle de rotation cible, inclut les étapes ci-dessous consistant à :
générer un signal d'entraînement du moteur de train d'atterrissage selon l'angle de rotation cible ;
envoyer le signal d'entraînement au moteur de train d'atterrissage (310), de préférence
dans lequel, après l'envoi du signal d'entraînement au moteur de train d'atterrissage (310), le procédé inclut en outre les étapes ci-dessous consistant à :
obtenir un angle de rotation effectif du moteur de train d'atterrissage (310) sur la base d'un premier dispositif de détection (800) ;
ajuster le signal d'entraînement selon l'angle de rotation effectif.

11. Procédé selon la revendication 1, dans lequel :
le moteur d'axe de lacet (210) est doté d'un codeur ;
l'étape d'obtention de l'angle de rotation en temps réel du moteur d'axe de lacet (210) inclut l'étape ci-dessous consistant à :
obtenir l'angle de rotation en temps réel du moteur d'axe de lacet (210) par l'intermédiaire du codeur.

12. Procédé selon la revendication 1, dans lequel, avant l'obtention de l'angle de rotation en temps réel du moteur d'axe de lacet (210), le procédé inclut en outre les étapes ci-dessous consistant à :
commander au train d'atterrissage (300, 310) d'être à la position zéro ;
commander la rotation de la suspension à la Cardan (200) après que le train d'atterrissage (300, 310) est à la position zéro.

13. Procédé selon la revendication 12, dans lequel l'étape consistant à commander au train d'atterrissage (300, 310) d'être à la position zéro inclut les étapes ci-dessous consistant à :
obtenir des informations de position zéro du train d'atterrissage (300, 310) ;
commander au train d'atterrissage (300, 310) d'être à la position zéro selon les informations de position zéro ; ou
dans lequel l'étape consistant à commander au train d'atterrissage (300, 310) d'être à la position zéro, inclut les étapes ci-dessous consistant à :
commander, par l'intermédiaire du moteur de train d'atterrissage (310), la rotation du train d'atterrissage (300, 310) ;
obtenir une relation de position relative entre le train d'atterrissage (300, 310) et l'axe de lacet de la suspension à la Cardan (200) détecté par un second dispositif de détection (900) ;
déterminer que le train d'atterrissage (300, 310) est à la position zéro lorsqu'il est déterminé que le train d'atterrissage (300, 310) est aligné avec l'axe de lacet de la suspension à la Cardan selon la relation de position relative ; ou
dans lequel l'étape consistant à commander au train d'atterrissage (300, 310) d'être à la position zéro est mise en œuvre immédiatement après qu'il a été déterminé que le véhicule UAV est mis sous tension ; ou
dans lequel, avant qu'il ait été commandé au train d'atterrissage (300, 310) d'être à la position zéro, le procédé inclut en outre l'étape ci-dessous consistant à :
étalonner la position zéro du train d'atterrissage (300, 310).

14. Dispositif de commande pour un véhicule aérien sans pilote (UAV) comprenant un processeur (500), une suspension à la Cardan (200) destinée à porter un dispositif de photographie (400), un moteur de train d'atterrissage (310) pour entraîner un train d'atterrissage (300, 310) du véhicule UAV en rotation, dans laquelle la suspension à la Cardan (200) inclut un moteur d'axe de lacet (210), le processeur (500) est connecté électriquement au moteur de train d'atterrissage (310) et au moteur d'axe de lacet (210), il existe un ou plusieurs processeurs (500), travaillant individuellement ou collectivement, et le processeur (500) est configuré de manière à mettre en œuvre le procédé selon l'une quelconque des revendications précédentes.

15. Véhicule aérien sans pilote (UAV), comprenant :
le dispositif selon la revendication 14 ;
un ensemble châssis (100) ;
dans lequel la suspension à la Cardan (200) est montée au niveau de l'ensemble châssis (100) afin de porter le dispositif de photographie (400).
